# EUROPEAN PATENT SPECIFICATION

(11) **EP 0 610 822 B1**
(45) Date of publication and mention of the grant of the patent: **26.03.1997**
(21) Application number: 94101705.5
(22) Date of filing: 04.02.1994
(51) Int. Cl.: E05D 15/28, E05F 15/04, B61D 19/00, B60J 5/06

(54) **Bus with floor and door mechanism used hereby**
Omnibus mit niedrigem Boden und Türmechanismus dafür
Autobus avec plancher surbaissé et mécanisme de porte adapté

(30) Priority: 10.02.1993 BE 9300122
(43) Date of publication of application: 17.08.1994
(73) Proprietor: VAN HOOL, naamloze vennootschap, B-2500 Koningshooikt (BE)
(72) Inventor: Van Hool, Carl Bernard, B-2500 Koningshooikt (BE)
(74) Representative: Donné, Eddy

(56) References cited:
- GB-A- 642 509
- NL-C- 73 069
- US-A- 4 087 939

## Description

The invention concerns a bus with a floor and a superstructure which is provided with at least one door opening in which a door is mounted, which door contains at least one door panel and a door mechanism onto which said door panel is suspended and which contains means to move the door panel between open and closed position, whereby the door (7 or 9) is an inwardly opening door and the door mechanism (13,14,15) contains an upper swivelling arm (13) which is fixed, on the one hand hingedly by means of a pivot (20, 21) to the superstructure (3) and, on the other hand, eccentrically to the door panel (8) and a lower swivelling arm (14) which is fixed, on the one hand hingedly by means of a pivot (32,33) to the whole consisting of the superstructure (3) and the floor and, on the other hand, eccentrically to the door panel.
A bus of this kind is known from NL-C-73069. This bus is however a classical bus with a high floor provided with an inner stairs at the door. These stairs provide a building-in space for the lower swivelling arm which can be built-in before and/or under the steps. The passengers are not hindered by this lower swivelling arm as they normally wait on the elevated floor above the stairwell for the door to open.

Buses with low floors have been recently developed and are specially built to provide access to disabled and handicapped persons sitting in a wheelchair. In such buses, there are no steps at the door and thus neither any gate chambers before and/or under the steps. Moreover, the low floor with low step is usually combined with an extra "kneeling" of the bus at critical bus stops, whereby by means of the pneumatic suspension the superstructure with the floor is lowered in relation to the street or pavement.

New safety problems arise with such buses with low floors as far as the doors are concerned, and the conventional door mechanisms as used in buses with a normal high floor as the above mentioned bus described in NL-C-73069, cannot be used as such. As there are no such stairs, standing passengers can post themselves up against the door. As a result, the lower swivelling arm or guiding rods above the floor could hurt passengers as the door opens.

The invention aims to remedy said disadvantages and to provide a bus with a low floor with a relatively simple but yet entirely safe door mechanism for the passenger doors.

To this aim, not only the floor is a low floor but the lower swivelling arm is L-shaped, one of its legs being situated under the low floor and being hingedly fixed to the whole consisting of the superstructure and the floor by means of the last mentioned pivot, the other leg protruding through a concentrically bent groove in the floor and being eccentrically fixed to the door panel, both above mentioned pivots comprising a ball-bearing surrounding a hinge pen.

GB-A-642.509 discloses a vehicle with hinged rear doors, each door comprising a door pannel fixed by means of an upper swivelling arm to the superstructure an by means of a lower swivelling arm to the floor. In one embodiment, the lower arm consists of two legs, one leg being situated under the floor, the other leg protruding through a bent groove in the floor.

This vehicle is not a bus but a van with a normal high floor. Moreover the pivots comprise hinge pens but no ball bearings and no means are provided to move the door panel between open and closed position.

According to a special embodiment of the invention the geometrical pivots of the two swivelling arms are situated in line, preferably a line perpendicular to the floor.

According to a practical embodiment of the invention the means to move the door panel consist of a remote-controlled source of power which acts on the upper swivelling arm. The lower swivelling arm is in this case a cooperating arm which serves to secure the door panel in closed position.

Said upper swivelling arm may be situated in the roof curve of the superstructure and may be shorter than the lower swivelling arm.

The part of the lower swivelling arm which is situated under the floor is preferably protected against road dirt by means of a dust cap.

The invention also concerns the door mechanism which is apparently meant to be used in a bus with a low floor according to any of the above embodiments.

In order to better explain the characteristics of the invention, the following preferred embodiment of a bus with a low floor and a door mechanism used hereby, according to the invention, is described by way of example without being limitative in any way, with reference to the accompanying drawings, where:
Figure 1 shows a view in perspective of a bus with a low floor according to the invention;
figure 2 shows a section according to line II-II from figure 1 to a larger scale;
figure 3 shows a section according to line III-III from figure 1 to the same scale as figure 2;
figure 4 shows a section according to line IV-IV from figure 1 to the same scale as figures 2 and 3;
figure 5 is a schematic representation of a door panel in several positions.

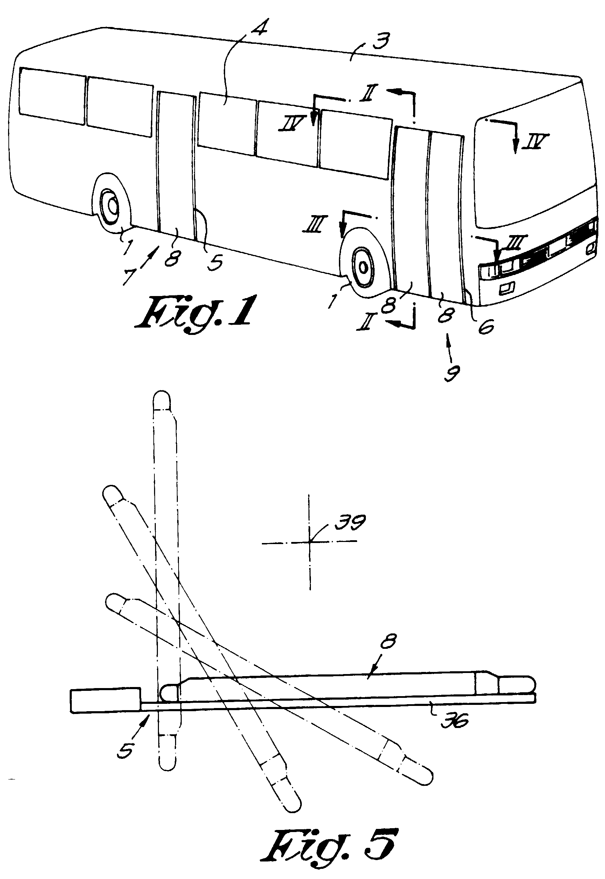

The bus according to figure 1 contains a chassis carried by wheels 1 in the usual manner, an engine mounted thereupon, a floor 2 mounted on the chassis and a superstructure 3 provided with windows 4 and door openings 5 and 6 to allow the passengers to get on.

The bus is of the type with a low floor 2, which means that the floor 2 is situated lower than in a conventional bus and extends to the door openings 5 and 6 without a step being provided there. Moreover, the bus can kneel so to say in a known manner by means of the existing pneumatic suspension, which means that it can be extra lowered during a halt so as to allow disabled or handicapped persons in wheelchairs to get on more easily.

In the rear door opening 5 a door 7 is mounted for example with one single panel 8, whereas in the front door opening 6 a door 9 with two door panels 8 is mounted which allows for a faster passenger flow. These door panels 8 consist in a known manner of a frame 10 made up of mouldings on whose vertical parts rubber sealing strips 11 are fixed, and of a pane 12 which is mounted in said frame.

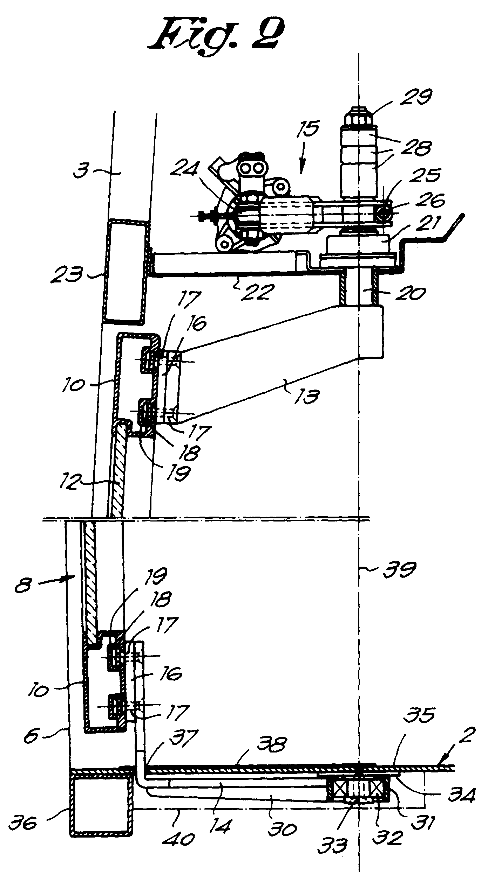

As is clearly represented in figure 2, the door mechanism onto which each door panel 8 is fixed, mainly consists of two swivelling arms, namely an upper swivelling arm 13 and a lower swivelling arm 14, and a pneumatic cylinder/piston mechanism 15 to rotate the upper swivelling arm 13.

The upper swivelling arm 13 is fixed with one end, via a packing plate 16, by means of two hexagonal socket screws 17 with countersunk head to two fastening members 18 which are fixed in grooves 19 in the upper moulding of the frame 10 of the door panel 8, practically in the middle of the top side. The other end of this swivelling arm 13 has a hinge pen 20 at the top which protrudes through a self-adjusting ball-bearing 21 which is fixed at the top onto an inwardly directed wall 22 which forms the bottom side of a casing formed above the door opening 5 or 6 in the roof curve in which the cylinder/piston mechanism 15, and in the case of the door 9, the two cylinder/piston mechanisms, are erected. This wall 22 is welded onto a beam 23 which confines the door opening 5 or 6 at the top.

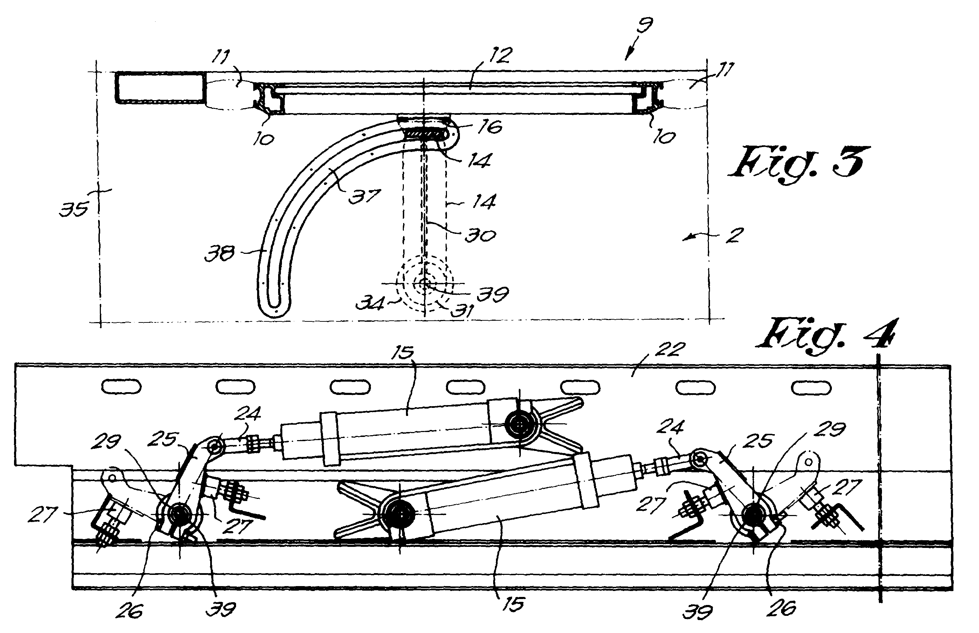

The pneumatic cylinder/piston mechanisms 15 are operated by the bus driver through remote control in a known manner which is not further described here. The cylinder of each cylinder/piston mechanism 15 is fixed to the wall 22 by means of hinges round a standing shaft. The piston rod 24 of the cylinder/piston mechanism 15 is, as represented in figure 4, fixed by means of a hinges to a little lever 25 with a fork-shaped end. The two legs of this end are drawn together by means of a bolt 26 and are thus clasped on the hinge pen 20 situated in between which is thus rotated by tilting the little lever 25 when the cylinder/piston mechanism 15 is pulled out. Two stops 27 on the wall 22 limit the rotation of the little lever 25.

The adjustment in height of the hinge pen 20 and subsequently of the entire door panel 8 which is suspended to the upper swivelling arm 13 is done by means of adjusting rings 28 which are provided on the hinge pen 20 both under the ball bearing 21 and above the little lever 25. On the topmost end of the hinge pen 20, which is threaded, a nut 29 is screwed with which the hinge pen 20 rests on the wall 22 via the adjusting rings 28 situated above the ball bearing 21.

The lower swivelling arm 14 is L-shaped. One leg of it is situated under the floor 2, reinforced by a rib 30 and fixed with its free end to a bush 31 which by means of a ball bearing 32 surrounds a hinge pen 33 which is fixed to a reinforcement plate 34 which is welded to the bottom side of the floor plate 35 of the floor 2. Said floor plate 35 is welded on a horizontal beam 36 which extends in the superstructure 3 right under the door openings 5 and 6. The other leg of the lower swivelling arm 14 is pointed vertically upward and fixed practically in the middle of the bottom side of the door panel 8 against the inner side thereof in the same manner as the upper arm 13.

Last-mentioned leg extends through a groove 37 provided in the floor plate 35. As is clearly shown in figure 3, said groove 37 forms one quarter of a circle with the pivot of the swivelling arm 14 as its centre. The groove 37 is surrounded at the top by a reinforcement border 38 with which also rubber strips can be fixed which, along the upwardly directed leg of the lower swivelling arm 14, seal off the groove 37.

As the door panel 8 is bent inward towards the top, the upper swivelling arm 13 is shorter than the lower swivelling arm 14. The geometrical pivots of the hinge pens 20 and 33, however, are situated on one and the same line 39, perpendicular to the floor 2, which is represented in figure 2 by means of a chain line.

For the correct alignment of the geometrical pivots of the two swivelling arms 13 and 14, the ball bearings 21 and 32 are mounted in the right place in relation to the superstructure 3 by means of gauges. In the wall 22 and the corresponding part of the floor 2, the shaft centring holes for mounting the bearings and the guiding groove 37 are accurately provided by means of a laser beam.

The leg of the lower swivelling arm 14 situated under the floor 2 is protected against road dirt by means of a dust cap 40 which is fixed against the bottom side of the floor plate 35. This dust cap is provided at the bottom with a small drain hole for draining off water which may possibly penetrate.

If, as represented in the figures 2 to 4, the door 6 has two door panels 8, they will move simultaneously, whereby the swivelling arms 13 and 14 turn to one another as the door closes. The two door mechanisms 13, 14, 15 which move these two panels are symmetrical in relation to the edges of these panels 8 which are situated next to one another in closed position, whereby in the casing which is formed above the door opening 6, the two cylinder/piston mechanisms 15 are erected as represented in figure 4.

Figure 5 represents a door panel 8 in closed position by means of a full line and in partly open, entirely open positions respectively by means of a chain line.

Although the above-described door mechanism has a relatively simple construction, it is entirely safe. The door panel 8 of the door 7 and in case of a double door 9 the two door panels 8 open inwards, but the lower swivelling arm 14 of the door mechanism which moves a panel 8 is mainly situated under the floor 2. The passengers can, without being hindered by said swivelling arm 14 as the doors open or close, post themselves up against the door opening 5 or 6.

The present invention is by no means limited to the embodiment described above and represented in the accompanying drawings; on the contrary, said bus with a low floor and door mechanism used hereby can be made according to all sorts of variants while still remaining within the scope of the invention.

## Claims

1. Bus with a floor (2) and a superstructure (3) which is provided with at least one door opening (5,6) in which a door (7 or 9) is mounted, which door contains at least one door panel (8) and a door mechanism (13,14,15) onto which said door panel (8) is suspended and which contains means (15) to move the door panel (8) between open and closed position, whereby the door (7 or 9) is an inwardly opening door and the door mechanism (13,14,15) contains an upper swivelling arm (13) which is fixed, on the one hand hingedly by means of a pivot (20, 21) to the superstructure (3) and, on the other hand, eccentrically to the door panel (8) and a lower swivelling arm (14) which is fixed, on the one hand hingedly by means of a pivot (32,33) to the whole consisting of the superstructure (3) and the floor and, on the other hand, eccentrically to the door panel (8), characterized in that the floor (2) is a low floor and in that the lower swivelling arm (14) is L-shaped, one of its legs being situated under the low floor (2) and being hingedly fixed to the whole consisting of the superstructure (3) and the floor (2) by means of the last mentioned pivot (32, 33), the other leg protruding through a concentrically bent groove (37) in the floor (2) and being eccentrically fixed to the door panel (8), both above mentioned pivots (20,21 and 32,33) comprising a ball-bearing (21 respectively 33) surrounding a hinge pen (20 respectively 32).

2. Bus according to claim 1, characterized in that at least the ball-bearing (21) of the pivot (20,21) fixing the upper swivelling arm (13) to the superstructure (3) is a self-adjusting ball-bearing.

3. Bus according to claim 1 or 2, characterized in that the geometrical pivots of the two swivelling arms (13 and 14) are situated in line.

4. Bus according to the above claim, characterized in that the geometrical pivots of the two swivelling arms (13 and 14) are situated perpendicular to the floor (2).

5. Bus according to any of the above claims, characterized in that the means (15) to move the door panel (8) consist of a remote-controlled source of power which acts on the upper swivelling arm (13).

6. Bus according to any of the above claims, characterized in that the upper swivelling arm (13) is shorter than the lower swivelling arm (14).

7. Bus according to any of the above claims, characterized in that the part of the lower swivelling arm (14) which is situated under the floor (2) is preferably protected against road dirt by means of a dust cap (40).

8. Bus according to any of the above claims, characterized in that the groove (37) in the floor (2) through which the upwardly directed part of the lower swivelling arm (14) protrudes extends according to practically a quarter of a circle with the geometrical pivot of said swivelling arm (14) as its centre.

9. Door mechanism (13, 14, 15) of the bus with low floor according to any of the above claims.

## Patentansprüche

1. Omnibus mit einem Boden (2) und einem Aufbau (3), der mit zumindest einer Türöffnung (5,6), worin eine Tür (7 oder 9) montiert ist, versehen ist, welche Tür zumindest ein Türpaneel (8) und einen Türmechanismus (13,14,15) umfaßt, an welchem besagtes Türpaneel (8) aufgehängt ist und der Mittel (15) zum Bewegen des Türpaneels (8) zwischen offener und geschlossener Position umfaßt, wobei die Tür (7 oder 9) eine nach innen öffnende Tür ist und der Türmechanismus (13,14,15) einen oberen Schwenkarm (13) umfaßt, der einerseits scharnierbar mittels eines Drehpunkts (20, 21) an dem Aufbau (3) und, andererseits, exzentrisch am Türpaneel (8) befestigt ist, und einen unteren Schwenkarm (14), der einerseits scharnierbar mittels eines Drehpunkts (32, 33) an dem Ganzen, bestehend aus dem Aufbau (3) und dem Boden, und, andererseits, exzentrisch am Türpaneel (8) befestigt ist, dadurch gekennzeichnet, daß der Boden (2) ein niedriger Boden ist und dadurch, daß der untere Schwenkarm (14) L-förmig ist, wobei einer seiner Schenkel unter dem niedrigen Boden (2) angeordnet ist und scharnierbar mittels des letztgenannten Drehpunkts (32, 33) an dem Ganzen, bestehend aus dem Aufbau (3) und dem Boden (2), befestigt ist, wobei der andere Schenkel durch eine konzentrisch gebogene Nut (37) im Boden (2) ragt und exzentrisch am Türpaneel (8) befestigt ist, wobei beide obenerwähnte Drehpunkte (20,21 und 32,33) ein Kugellager (21 beziehungsweise 33) umfassen, das einen Scharnierzapfen (20 beziehungsweise 32) umgibt.

2. Omnibus gemäß Anspruch 1, dadurch gekennzeichnet, daß zumindest das Kugellager (21) des Drehpunkts (20,21), der den oberen Schwenkarm (13) an dem Aufbau (3) befestigt, ein selbstregulierendes Kugellager ist.

3. Omnibus gemäß Anspruch 1 oder 2, dadurch gekennzeichnet, daß die geometrischen Drehpunkte der zwei Schwenkarme (13 und 14) in einer Linie angeordnet sind.

4. Omnibus gemäß dem obengenannten Anspruch, dadurch gekennzeichnet, daß die geometrischen Drehpunkte der zwei Schwenkarme (13 und 14) senkrecht zum Boden (2) angeordnet sind.

5. Omnibus gemäß einem der obengenannten Ansprüche, dadurch gekennzeichnet, daß die Mittel (15) zum Bewegen des Türpaneels (8) aus einer fernbedienten Energiequelle bestehen, die auf den oberen Schwenkarm (13) wirkt.

6. Omnibus gemäß einem der obengenannten Ansprüche, dadurch gekennzeichnet, daß der obere Schwenkarm (13) kürzer ist als der untere Schwenkarm (14).

7. Omnibus gemäß einem der obengenannten Ansprüche, dadurch gekennzeichnet, daß der Teil des unteren Schwenkarms (14), der unter dem Boden (2) angeordnet ist, vorzugsweise mittels einer Staubabdeckung (40) gegen Straßenschmutz geschützt ist.

8. Omnibus gemäß einem der obengenannten Ansprüche, dadurch gekennzeichnet, daß die Nut (37) im Boden (2), durch welche das nach oben gerichtete Teil des unteren Schwenkarms (14) ragt, sich gemäß praktisch einem Viertel eines Kreises erstreckt, mit dem geometrischen Drehpunkt besagten Schwenkarms (14) als seinem Mittelpunkt.

9. Türmechanismus (13, 14, 15) des Omnibusses mit niedrigem Boden, gemäß irgendeinem der obengenannten Ansprüche.

## Revendications

1. Bus comprenant un plancher (2) et une superstructure (3) qui est munie d'au moins une ouverture de porte (5,6) dans laquelle est montée une porte (7 ou 9), ladite porte contenant au moins un panneau de porte (8) et un mécanisme de porte (13,14,15) auquel est suspendu ledit panneau de porte (8) et qui contient un moyen (15) pour déplacer le panneau de porte (8) entre des positions ouverte et fermée, dans lequel la porte (7 ou 9) est une porte s'ouvrant vers intérieur et le mécanisme de porte (13,14,15) contient un bras oscillant supérieur (13) qui est fixé d'une part, en articulation au moyen d'un pivot (20,21) à la superstructure (3) et d'autre part, en position excentrique au panneau de porte (8), et un bras oscillant inférieur (14) qui est fixé d'une part, en articulation au moyen d'un pivot (32,33) à l'ensemble constitué par la superstructure (3) et le plancher, et d'autre part, en position excentrique au panneau de porte (8), caractérisé en ce que le plancher (2) est un plancher surbaissé et en ce que le bras d'oscillation inférieur (14) est en forme de L dont une branche est située en dessous du plancher surbaissé (2) et est fixée en articulation à l'ensemble constitué par la superstructure (3) et le plancher (2) au moyen du pivot (32,33) mentionné en dernier lieu et dont l'autre branche fait saillie à travers une rainure (37) à coude concentrique pratiquée dans le plancher (2) et fixée en position excentrique au panneau de porte (8), les deux pivots mentionnés ci-dessus (20,21 et 32,33) comprenant un palier à billes (21 respectivement 33) entourant un gond de charnière (20 respectivement 32).

2. Bus selon la revendication 1, caractérisé en ce qu'au moins le palier à billes (21) du pivot (20,21) fixant le bras oscillant supérieur (13) à la superstructure (3) est un palier à billes à réglage automatique.

3. Bus la revendication 1 ou 2, caractérisé en ce que les pivots géométriques des deux bras oscillants (13 et 14) sont montés en ligne.

4. Bus selon la revendication ci-dessus, caractérisé en ce que les pivots géométriques des deux bras pivotants (13 et 14) sont situés perpendiculairement au plancher (2).

5. Bus selon l'une quelconque des revendications ci-dessus, caractérisé en ce que le moyen (15) pour déplacer le panneau de porte (8) est constitué par une source d'énergie commandée à distance qui agit sur le bras pivotant supérieur (13).

6. Bus selon l'une quelconque des revendications ci-dessus, caractérisé en ce que le bras oscillant supérieur (13) est plus court que le bras oscillant inférieur (14).

7. Bus selon l'une quelconque des revendications ci-dessus, caractérisé en ce que la partie du bras oscillant inférieur (14) qui est située en dessous du plancher (2) est de préférence protégée contre les saletés de la route au moyen d'un couvercle anti-poussière (40).

8. Bus selon une quelconque des revendications ci-dessus, caractérisé en ce la rainure (37) pratiquée dans le plancher (2), à travers laquelle fait saillie la partie du bras oscillant inférieur (14) orientée vers le haut, s'étend en formant pratiquement un quart de cercle dont le pivot géométrique dudit bras oscillant (14) forme le centre.

9. Mécanismes de porte (13,14,15) du bus à plancher surbaissé selon l'une quelconque des revendications ci-dessus.
